# EUROPEAN PATENT SPECIFICATION

(11) **EP 4 670 026 B1**
(45) Date of publication and mention of the grant of the patent: **05.08.2026**
(21) Application number: 24704431.6
(22) Date of filing: 12.02.2024
(51) Int. Cl.: G06F 3/01, G06F 3/0346

(54) **AN AUGMENTED REALITY SYSTEM FOR CONTROLLING A CONTROLLABLE DEVICE**
SYSTEM FÜR ERWEITERTE REALITÄT ZUR STEUERUNG EINER STEUERBAREN VORRICHTUNG
SYSTÈME DE RÉALITÉ AUGMENTÉE POUR COMMANDER UN DISPOSITIF POUVANT ÊTRE COMMANDÉ

(30) Priority: 20.02.2023 EP 23157448
(43) Date of publication of application: 31.12.2025
(73) Proprietor: Signify Holding B.V., 5656 AE Eindhoven (NL)
(72) Inventor: VAN DE SLUIS, Bartel Marinus, 5656 AE Eindhoven (NL); ALIAKSEYEU, Dzmitry Viktorovich, 5656 AE Eindhoven (NL); MEERBEEK, Berent Willem, 5656 AE Eindhoven (NL); WENDT, Matthias, 5656 AE Eindhoven (NL)
(74) Representative: Verweij, Petronella Daniëlle
(86) International application number: PCT/EP2024/053405
(87) International publication number: WO 2024/175384

(56) References cited:
- US-A1- 2016 274 762
- US-A1- 2016 313 902
- US-A1- 2022 155 861
- PARK SEONGHUN ET AL: "Development of an Online Home Appliance Control System Using Augmented Reality and an SSVEP-Based Brain-Computer Interface", vol. 7, 20 November 2019 (2019-11-20), pages 163604 - 163614, XP093060186, Retrieved from the Internet <URL:https://ieeexplore.ieee.org/ielx7/6287639/8600701/08895732.pdf?tp=&arnumber=8895732&isnumber=8600701&ref=aHR0cHM6Ly9pZWVleHBsb3JlLmllZWUub3JnL2Fic3RyYWN0L2RvY3VtZW50Lzg4OTU3MzI=> DOI: 10.1109/ACCESS.2019.2952613

## Description

### FIELD OF THE INVENTION

The invention relates to an augmented reality system for controlling a controllable device. The invention further relates to a method of controlling a controllable device and to a computer program product for executing the method.

### BACKGROUND

Home and professional control systems typically comprise a plurality of controllable devices that can be controlled via one or more control interfaces. A user may provide a user input to control a controllable device, whereupon the selected controllable devices is (wirelessly) controlled via a (home) network.

An example of a control interface is an augmented reality (AR) device. An AR device, such as smartglasses or a mobile device (e.g. a smartphone), comprises a display configured to render virtual objects as an overlay on a view of the physical environment. A processing unit coupled to or comprised in the AR display may, for example, render a virtual overlay on the view of the real environment with virtual content. The display may be a screen of a mobile or wearable device configured to render images captured by a camera, and the virtual objects may be rendered as an overlay on the images. Alternatively, the display 110 may be a see-through display (e.g. one or more glasses) and the virtual objects may be projected onto or rendered onto the see-through display. Alternatively, the AR display may be a contact lens. The processing unit may, for example, render icons of controllable devices (e.g. home appliances, connected media devices, lighting devices, etc.) as an overlay on the AR display such that a user can select and control these controllable devices, for instance by interacting with the icons or by providing other types of user inputs. An example of such a system is disclosed in WO 2010079400 A1.

US 2022155861 A1 discloses an augmented reality (AR) glasses device including: a camera, a transparent display, a communication circuit, a memory storing images of a plurality of ex-ternal electronic devices, and a processor. The processor may be configured to control the AR glasses device to: acquire an image including an image of at least one external electronic device, acquire running application information of the at least one external electronic device, identify a first external electronic device corresponding to a gaze from among the at least one external electronic device from the acquired image, determine whether a specified application is running in the first external electronic device based on the running application information, and connect to the first external electronic device using a communication circuit, based on the specified application running.

### SUMMARY OF THE INVENTION

The inventors have realized that with the increasing number of controllable devices, the display of the augmented reality device may become cluttered with icons of controllable devices. It is therefore an object to provide an AR control system that reduces the number of controllable device icons on a display.

According to a first aspect, the object is achieved by an augmented reality system for controlling a controllable device located in an environment, the augmented reality system comprising:
- an augmented reality device comprising a display configured to render an indicator indicative of a selection of the controllable device,
- an input interface configured to receive an input signal indicative of an environmental change in the environment,
- one or more sensors configured to provide one or more sensor signals indicative of a gaze direction of a user and/or an orientation direction of the augmented reality device, and
- a processor configured to:
   determine, based on one or more sensor signals from the one or more sensors, that the gaze direction of the user and/or the orientation direction of the augmented reality device has changed towards a target area within a predefined time period after the environmental change in the environment, wherein the target area is associated with the controllable device,
   determine a duration of the gaze of the user and/or the orientation of the augmented reality device towards the target area, and
   if the duration exceeds a threshold duration, render the indicator indicative of the selection of the controllable device on the display, and
   if the duration does not exceed the threshold duration, refrain from rendering the indicator indicative of the selection of the controllable device on the display.

The indicator (e.g. an icon, a virtual representation of the controllable device, a virtual contour of the controllable device, etc.) indicative of the selection of the controllable device is therefore rendered (shown) on the display only if the user gazes/looks at the target area or points the augmented reality device towards the target area after the change in the environment has been detected, and for a duration longer than the required threshold duration. Hence, a response of the user to the change of the environmental change in the environment is detected, and the indicator is only rendered if the user looks at the target area or if the user points the points the augmented reality device towards the target area. By rendering the indicator the user can see that the controllable device has been selected (whereafter it may for example be controlled, commissioned or configured). The controllable device may be one of a plurality of controllable devices. By selectively rendering the indicator indicative of the selection of the controllable device on the display, only the relevant indicators are rendered on the display. This reduces the number of controllable device indicators (e.g. icons) on a display, and therewith clutter of indicators on the display can be avoided/reduced.

The augmented reality system may further comprise a user interface configured to receive a user input when the indicator is rendered on the display, and wherein the processor is further configured to control the controllable device based on the user input. This enables the user to control the controllable device by providing the user input after the user has gazed/looked at the controllable device for (at least) the required duration.

The processor may be further configured to stop rendering the indicator if the user input has not been received within a predefined time period after the rendering of the indicator. It may occur that the user accidentally gazes/looks and/or points the augmented reality device at the target area without the intent to control the controllable device. Thus, it may be beneficial to stop rendering the indicator if the user input has not been received within a predefined time period, because it reduces the number of controllable device icons on a display, and therewith clutter of icons on the display can be avoided/reduced.

The input interface may be configured to receive the input signal indicative of the environmental change in the environment from the controllable device, and the input signal may be indicative of an initial control of the controllable device. The input signal may be received from the controllable device directly or indirectly (e.g. via a control bridge, a central control system, a remote server, etc.). The controllable device may be controlled by any source (e.g. a control routine, a user input from another user, a control input from another device, etc.) according to an initial control command. In response to the initial control of the controllable device, the user may look at the controllable device (which may be located in the target area), for instance to control the controllable device because the user dislikes the initial control. By selectively providing the indicator indicative of the selection of the controllable device on the display (i.e. when the gaze direction of the user has changed towards the controllable device in response to the initial control), the indicator indicative of the selection is (only) rendered when required.

The input interface may be further configured to receive the input signal indicative of the environmental change in the environment from a further sensor, the further sensor being configured to detect a change of an environmental characteristic of the environment. The processor may be configured to determine, based on the input signal from the further sensor, that the change of the environmental characteristic was caused by the initial control of the controllable device, determine that the gaze direction of the user and/or the orientation direction of the augmented reality device has changed towards the target area in response to the change of the environmental characteristic, and render the indicator indicative of the selection of the controllable device on the display if the gaze direction of the user and/or the orientation direction of the augmented reality device has changed towards the target area in response to the change of the environmental characteristic. Alternatively, the environmental change in the environment may have been caused by an external source, such as another controllable device or another source (e.g. a change of the illumination in the environment caused by the sun, a change of the sound in the environment caused by an external sound source, etc.).

The processor may be further configured to determine a time period between the environmental change and the moment the gaze direction of the user and/or the orientation direction of the augmented reality device has changed towards the target area, and set the threshold duration based on the time period. The processor may, for example, be configured to set the threshold duration based on the time period such that for a longer time period a longer threshold duration is set (and for a shorter time period a shorter (required) threshold duration). Thus, if the user would quickly respond to the initial control, the required duration would be shorter, which would be beneficial for the user experience because the user may for example immediately control the selected controllable device.

The user interface may be a brain control interface configured to detect brain activity of a user and to derive a control command from the brain activity, wherein the user input is the derived control command. Additionally or alternatively, the user interface may be a voice control interface, and the user input may be a voice command. Additionally or alternatively, the user interface may be a gesture interface, and the user input may be a gesture command. A gesture can be a movement of any body part, e.g. the waving a hand, , shaking the head as a way to indicate disapproval of the initial control, etc. Additionally or alternatively, the user interface may be a touch or tap control interface, whereby the user could interact with a touchscreen on the augmented reality device (e.g. a smartphone), or augmented reality on the side of the legs of the AR device. The user interface could also combine various user input types, e.g. the user could tap the (side of the) AR glasses while providing a voice command (e.g. by saying "undo"). The controllable device may be located in the target area. The target area may be determined (e.g. by the processor) such that it corresponds to the location of the controllable device. Additionally or alternatively, the target area may be an area affected by the controllable device (e.g. a sensing area of a sensor device, an effect area of a lighting device or an audio device, etc.). Additionally or alternatively, the target area is a user defined area. A user may, for example, define a location and/or a size of the target area via a user interface, such that when the user gazes towards that target area or points the augmented reality device towards that target area within a predefined time period after the environmental change in the environment for a duration that exceeds the threshold duration, the indicator is rendered.

The controllable device may be a lighting device, and the environmental change in the environment may be an illumination change in the environment. Alternatively, the controllable device may, for example, be a connected (home) appliance or connected (office) equipment.

The one or more sensors may be configured to determine the gaze direction of the user and the one or more sensors may comprise an eye tracking sensor. The eye tracking sensor may be comprised in a head-mounted device (e.g. smart glasses, AR glasses) and detect the gaze direction of the user with respect to the controllable device (and other controllable devices). Additionally or alternatively, the one or more sensors may comprise one or more location and/or orientation sensors for detecting a location and/or an orientation of the user relative to the controllable device. The gaze direction of the user relative to the target area may be determined based on the location and/or the orientation of the user relative to the controllable device.

According to a second aspect, the object is achieved by a method of controlling a controllable device located in an environment, comprising:
receiving an input signal indicative of an environmental change in the environment,
obtaining, from one or more sensors, one or more sensor signals indicative of a gaze direction of a user and/or an orientation direction of the augmented reality device,
determining, based on one or more sensor signals, that the gaze direction of the user and/or the orientation direction of the augmented reality device has changed towards a target area within a predefined time period after the environmental change in the environment, wherein the target area is associated with the controllable device,
determining a duration of the user and/or the orientation of the augmented reality device of the gaze towards the target area, and
if the duration exceeds a threshold duration, rendering an indicator indicative of a selection of the controllable device on a display of an augmented reality system,
if the duration does not exceed the threshold duration, refraining from rendering the indicator indicative of the selection of the controllable device on the display of the augmented reality system.

According to a third aspect, the object is achieved by a computer program product comprising computer program code to perform the method when the computer program product is run on a processing unit of the computing device.

It should be understood that the method and the computer program product may have similar and/or identical embodiments and advantages as the above-mentioned augmented reality system.

### BRIEF DESCRIPTION OF THE DRAWINGS

The above, as well as additional objects, features and advantages of the disclosed systems, devices and methods will be better understood through the following illustrative and non-limiting detailed description of embodiments of devices and methods, with reference to the appended drawings, in which:
Fig. 1 shows schematically an example of an augmented reality system for controlling a controllable device;
Figs. 2a and 2b show schematically examples of augmented reality devices wherein control options are displayed on a display of the augmented reality device; and
Fig. 3 shows schematically a method of controlling a controllable device.

All the figures are schematic, not necessarily to scale, and generally only show parts which are necessary in order to elucidate the invention, wherein other parts may be omitted or merely suggested.

### DETAILED DESCRIPTION

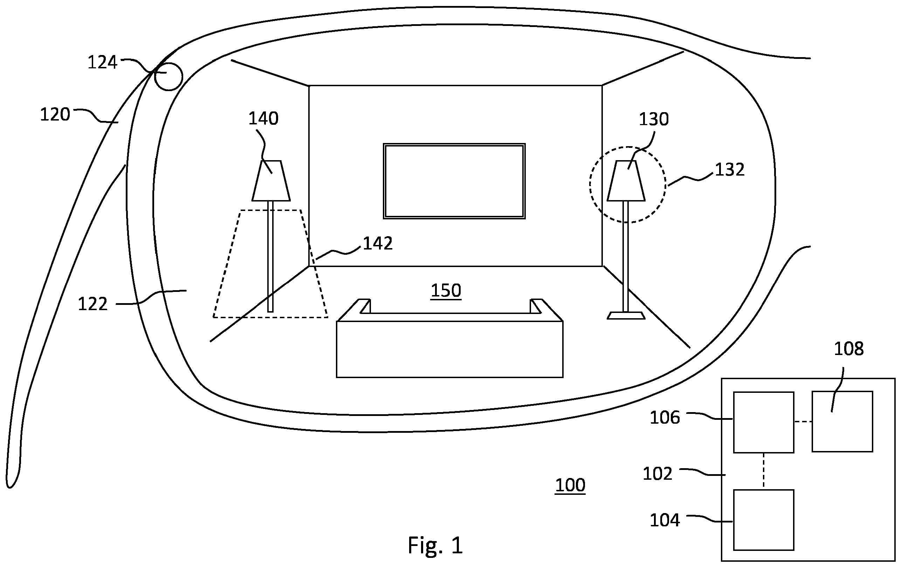

Fig. 1 show schematically an example of an augmented reality device 120 for use in an augmented reality system 100. In Fig. 1, the augmented reality device 120 is depicted as a head-mounted augmented reality device (e.g. augmented reality glasses). A plurality of controllable devices 130, 140 (depicted as lighting devices) and the augmented reality device 120 are located in a physical environment 150. The augmented reality device 120 comprises a display 122 for rendering virtual objects, such as virtual representations of the controllable devices 130, 140, as an overlay on the environment 150. The augmented reality device 120 further comprises an input interface 108 configured to receive an input signal indicative of an environmental change in the environment 150. The augmented reality device 120 further comprises one or more sensors 124 configured to provide one or more sensor signals indicative of a gaze direction of a user (e.g. relative to the controllable device 130, 140, relative to the environment 150, etc.) and/or of an orientation direction of the augmented reality device 120. The augmented reality system 100 comprises a control system 102 for controlling the plurality of lighting devices 130, 140. The control system 102 comprises one or more processors 106 (e.g. circuitry, microcontrollers, microchips). The control system 102 may further comprise one or more communication units 104 for communicating with the controllable devices 130, 140 and/or the augmented reality device 120. The one or more processors 106 are configured to: determine, based on one or more sensor signals from the one or more sensors 120, that the gaze direction of the user and/or an orientation direction of the augmented reality device 120 has changed towards a target area 132 within a predefined time period after the environmental change in the environment (and/or after the signal has been received), wherein the target area 132 is associated with a controllable device 132 (in Fig. 1 controllable device 130), and to determine a duration of the gaze of the user and/or the orientation of the augmented reality device 120 towards the target area 132. If the (gaze/orientation) duration exceeds a threshold duration, the processor 106 may render an indicator 132 indicative of a selection of the controllable device 130 on the display 122. If the duration does not exceed the threshold duration, the processor 106 may refrain from rendering the indicator 132 indicative of the selection of the controllable device 130 on the display 122.

The control system 102 may comprise a single processor 106 for performing these steps. The processor 106 may, for example, be comprised in a (central) lighting control system (e.g. a bridge, a hub, a smartphone, etc.), in the augmented reality device 120, in a remote (cloud) server, etc. Alternatively, the control system 102 may comprise multiple processors 106 for performing these steps. The processors 106 may be located in different parts of a system 100, which system may further comprise the controllable devices 130, 140, the control system 102 and/or the augmented reality device 120. The locations of the processors 106 and the steps performed by the respective processors 106 may depend on the system architecture of the system 100. Examples thereof are explained below.

Fig. 1 further depicts two controllable devices 130, 140 located in the physical environment 150. The controllable devices 130, 140 may be any type of controllable device. The controllable devices 130, 140 may be devices configured to change an environmental parameter which is related to the environmental change in the environment. For instance, the controllable device may be an audio device, and the environmental change may be a sound in the environment 150. In another example, the controllable device may be a display device, the environmental change may be the switching on of the display. In another example, and the controllable device may be an HVAC system, and the environmental change may be a change in temperature, an activation of a mode of the HVAC system, etc. In another example, the controllable device may be a lighting device, and the environmental change may be a change in illumination of the environment 150. In the example of Fig. 1, the controllable devices 130, 140 are lighting devices. The lighting devices 130, 140 may comprise one or more (LED) light sources, and a processing unit for controlling the light output (e.g. hue, saturation and/or brightness) of the one or more light sources based on received control signals. The lighting devices 130, 140 may be arranged for providing general lighting, such as task lighting, ambient lighting, atmosphere lighting, accent lighting, indoor lighting, outdoor lighting, etc. The controllable devices 130, 140 may further comprise a communication unit (not shown) configured to receive control commands. The communication unit may comprise hardware for communicating via one or more wireless communication protocols, for example Bluetooth, Wi-Fi, Li-Fi, 3G, 4G, 5G or ZigBee. A specific communication technology may be selected based on the system architecture of the system 100.

The augmented reality system 100 comprises one or more sensors 124 configured to determine a gaze direction of a user and/or an orientation direction of the augmented reality device 120. The one or more sensors 124 may be configured to detect the gaze direction of the user relative to the controllable device or relative to the environment 150. The one or more sensors 124 may be integrated in the augmented reality device 120. The one or more sensors 124 may, for example, be one or more eye tracking sensors (e.g. cameras) integrated in the augmented reality device 120 configured to detect the gaze direction of the user. The augmented reality device 120 may further comprise a front-facing camera configured to capture images of the environment 150 and analyze the images to identify the controllable devices 130, 140 (e.g. using image recognition techniques, based on coded light emitted by a light source comprised in the controllable device, etc.) and detect the location of controllable devices 130, 140 in the image and therewith in the environment. The processor 106 may then determine the gaze of the user relative to the target area 132 to determine where the user is looking. In another example, augmented reality device 120 may further comprise a front-facing camera configured to capture images of the environment 150 and analyze the images to detect the location of controllable devices 130, 140 (or target area(s) 132) and estimate the gaze direction based on the locations of the controllable devices 130, 140 (or target area(s) 132) with respect to the center of the images and therewith with respect to the center of the field of view of the user. In another example, the one or more sensors 124 comprise one or more location and/or orientation sensors for detecting a location and/or an orientation of the augmented reality device 120) relative to a target area 132 (and/or the associated controllable device 130). The gaze direction of the user relative to a controllable device may be determined based on the location and/or the orientation of the user (and/or the augmented reality device 120) relative to the target area 132 (and/or the associated controllable device 130). The location and/or orientation of the user (e.g. the location and/or the orientation of the augmented reality device 120 operated by the user) may be determined based on data from an (indoor) positioning system, and/or based on location and/or orientation sensors (e.g. a gyroscope, accelerometer, etc.) comprised in the augmented reality device 120. Examples of such a positioning system include a radio frequency (RF) beacon system, a coded light positioning system, etc. It should be understood that techniques for determining relative locations (and orientations) of devices and/or users are known in the art and will therefore not be discussed in detail.

The processor 106 is configured to determine, based on one or more sensor signals from the one or more sensors, that the gaze of the user and/or the orientation direction of the augmented reality device 120 has changed towards a target area 132 within a predefined time period after the environmental change in the environment 150, and determine a duration of the gaze of the user and/or the orientation of the augmented reality device towards the target area. The predefined time period may preferably be less than 5 seconds and more preferably be less than 2 seconds, for example 1 second or 500 milliseconds. As depicted in the example of Fig. 1, the controllable device 130 may be located in the target area 132. The target area 132 may be determined (e.g. by the processor) such that it corresponds to the location of the controllable device 132. The target area 132 may be a region (e.g. a 2D region or a 3D volume) in the environment 150. The target area 132 is associated with the controllable device 130. The association may be stored in a memory as a look-up table (e.g. comprised in the control system 102, located remotely, etc.). The processor 106 may, for example, be configured to access the memory to retrieve the association between the target area 132 and the controllable device 130.

Additionally or alternatively, the target area may be an area affected by the controllable device (e.g. a sensing area of a sensor device, an effect area of a lighting device or an audio device, etc.). The target area can be in the field of view of the user (or of the augmented reality device 120), while the controllable device 120 may be outside the field of view. Fig. 1 illustrates an example of a target area 142 of an area (e.g. a light effect area) affected by controllable device 140. If the user looks at this area 142 (or orients the augmented reality device 120 towards this area 142) within the predefined time period after the environmental change in the environment, the indicator indicative of the selection of the associated controllable device 140 is rendered as on the display 122. Additionally or alternatively, the target area may be a user defined area. A user may, for example, define a location and/or a size of the target area via a user interface. The user interface may be further configured to receive a user input indicative of an association between the target area with a controllable device via the user interface, and associate the target area with a controllable device (for instance by storing an association in a memory). Thus, when the user gazes or points the augmented reality device towards that target area within the predefined time period after the environmental change in the environment 150 for a duration that exceeds the threshold duration, the indicator indicative of the selection of the associated controllable device 140 is rendered as on the display 122. If the target area is in the field of view of the user (or of the augmented reality device 120), the processor 106 may be configured to render an indication of the affected area (effect area) on the display 122. Additionally, the processor 106 may be configured to render an indicator (e.g. a line, an arrow) indicating the location of the affected area with respect to the location of the controllable device 130.

In the example of Fig. 1, the user may look at the target area 132 associated with controllable device 130 (depicted as a lighting device). If the user gazes towards or points the augmented reality device towards the controllable device 130 for a duration longer than a threshold duration within a predefined time period after the environmental change in the environment, the processor 106 renders an indicator 132 indicative of the selection of the controllable device 130 on the display 122. The processor 106 may thus select the controllable device 130 if the user gazes towards or points the augmented reality device towards the target area 132 associated with the controllable device 130 for a duration longer than the threshold duration after the environmental change. If the duration does not exceed the threshold duration, the processor 106 refrains from rendering the indicator 132 indicative of the selection of the controllable device 130 on the display 122. The threshold duration may be a predefined period of time, for example 1 second or 3 seconds, preferably less than 5 seconds. The threshold duration may, for example, be predefined, set by the processor 106, be based on a user profile of a user who is operating the augmented reality device 120, etc.

The processor 106 is configured to render the indicator 132 indicative of the selection of the controllable device 130 on the display 122 if the user has gazed or has pointed the augmented reality device at the target area associated with the controllable device for a duration longer than the threshold duration. The indicator 132 is rendered to show the user that the controllable device 130 has been selected. After the indicator 132 has been rendered, the user may provide one or more user inputs via a user interface. The user interface may be integrated in the augmented reality device 120 or in another device (e.g. a virtual home assistant, one or more sensors in the environment, etc.). The user input may be indicative of a control command for controlling the controllable device. In a first example, the controllable device 130 may be a lighting device, and the user input may be indicative of a lighting control command (e.g. a desired light setting, an on-command, an off-command, a dim command, etc.) for the lighting device. In another example, the controllable device 130 may be a media rendering device (e.g. a tv or a speaker), and the user input may be indicative of a control command for controlling the media rendering device (e.g. a desired audio/video channel, an on-command, an off-command, a volume command, a media selection command, etc.) for the media rendering device. The user input may be indicative of a configuration command for configuring or commissioning the controllable device. The configuration command may, for example, be indicative of a preferred setting for the controllable device, a name for the controllable device, a control rule for the controllable device (e.g. control based on sensor input, control based on a time of day, etc.) or any other configuration setting.

The processor 106 may be configured to control a further controllable device based on a gaze of the user (or an orientation \ of the augmented reality device 120) towards a further target area associated with the further controllable device. The processor 106 may be configured to determine a further duration of towards the further target area, and if the further duration exceeds a further threshold duration, render a further indicator indicative of the selection of the further controllable device on the display 122, and if the duration does not exceed the further threshold duration, refrain from rendering the further indicator indicative of the selection of the further controllable device on the display 122. The further threshold duration may be different (e.g. longer or shorter) than the threshold duration. The control of the further controllable device may not require a response to an environmental change in the environment, and may therefore have a different threshold duration.

The user interface may, for example, be a brain control interface (BCI) configured to detect brain activity of a user and to derive a control command from the brain activity. The user may thus first look at the target area 132 associated with the controllable device 130, whereupon it is selected and the indicator 132 thereof is rendered on the display 122. The user may then provide a brain command input after the controllable device 130 has been selected to control the controllable device 130. For instance, the BCI may comprise one or more electrodes for detecting EEG signals of the user. Other examples of known BCI technologies include but are not limited to magnetoencephalography, positron emission tomography, functional magnetic resonance imaging and functional near-infrared spectroscopy. Such BCIs are known in the art and will therefore not be discussed in detail. For a brain control interface (BCI, a control interface that analyzes brain activity of a user to derive control commands), it may be ambiguous whether a user is actually providing a dedicated control command or if the user is simply thinking about something related to a control command. For instance, the user may accidentally provide a lighting control command for a lighting device by thinking about the light in the room (e.g. "what a bright light"), for instance when light enters the room (e.g. sunlight). This may incorrectly be interpreted as a lighting control command and the lighting device would be controlled based thereon. It is therefore beneficial to only select the controllable device 130 if the user gazes at the target area 132 associated with the controllable device 130 for a duration longer than the threshold duration.

Additionally or alternatively, the user interface may be a gesture interface, and the user input may be a gesture command. Similar to the BCI, it may be ambiguous for a gesture control interface whether a user is actually providing a dedicated gesture command (e.g. a waving movement to dim the lights) or if the user is simply moving (e.g. waving to another person, repelling an insect, etc.) which may be incorrectly interpreted as a control command. Additionally or alternatively, the user interface may be a voice control interface and the user input may be a voice command. Similar to the BCI, it may be ambiguous for a voice control interface (e.g. a personal voice assistant) whether a user is actually providing a dedicated voice control command (e.g.: "switch on the lights") or if the user is simply talking about something related to a control command (e.g.: "John has just switched off the lights") which may be incorrectly interpreted as a control command. The user may thus first look at the target area 132 associated with controllable device 130, whereupon it is selected and the indicator 132 thereof is rendered on the display 122. The user may then provide a voice/gesture input after the controllable device 130 has been selected to control/configure the controllable device 130.

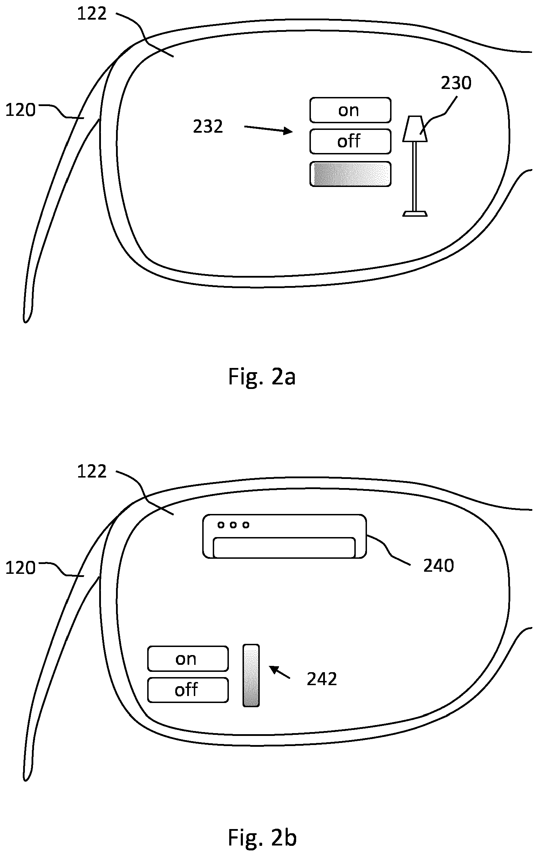

The processor 106 may be configured to render one or more virtual objects (e.g. icons) on the display indicative of control or configuration options for the controllable device 130. Figs. 2a and 2b show schematically examples of augmented reality devices 120 wherein control options 232, 242 for controllable devices 230, 240 are displayed on a display 122 of the augmented reality device 120. These one or more virtual objects 232, 242 may be the indicator indicative of that the controllable device has been selected. If, for example, the controllable device 230 is a lighting device, the processor 106 may render one or more virtual objects 232 indicative of lighting control options such as "on", "off" or a light setting/color selector for the light output of the lighting device. If, for example, the controllable device 240 is an air-conditioning unit, the processor 106 may render one or more virtual objects 242 indicative of lighting control options such as "on", "off" or a temperature/humidity for the air-conditioning unit. In another example, the controllable device 130 may be a lighting device, and the processor 106 may render one or more virtual objects indicative of configuration options such as an icon to set the time at which the lighting device switches on/off, or to associate the lighting device with a sensor such that the sensor triggers control of the lighting device.

The processor 106 may be further configured to stop rendering the indicator 132 on the display 122 if the user input has not been received within a predefined time period after the rendering of the indicator. For instance, if no user input has been received within 5 or 10 seconds after the indicator 132 has been displayed, the indicator 132 may be removed from the display 122.

The input interface 108 may be configured to receive the input signal indicative of the environmental change in the environment 150 from the controllable device 130, 140, and the input signal may be indicative of an initial control of the controllable device 130, 140. The input signal may be received from the controllable device directly or indirectly (e.g. via a control bridge, a central control system, a remote server, etc.). The controllable device may be controlled by any source (e.g. a control routine, a user input from another user, a control input from another device, etc.) according to an initial control command. In response to the control of the controllable device 130, the user may look at the controllable device 130, for instance to control the controllable device 130 because the user dislikes the initial control. For instance, a lighting device may be controlled, and in respond to the control the user may look at that lighting device. If the gaze of the user or the orientation of the augmented reality device is directed towards that lighting device for the threshold duration, the processor 106 may render the indicator indicative of the selection of the controllable device 130 on the display.

The input interface 108 may be further configured to receive the input signal indicative of the environmental change in the environment 150 from a further sensor, the further sensor being configured to detect a change of an environmental characteristic of the environment. The processor 106 may be configured to determine, based on the input signal from the further sensor, that the change of the environmental characteristic was caused by the initial control of the controllable device, determine that the gaze direction of the user and/or the orientation of the augmented reality device has changed towards the controllable device in response to the change of the environmental characteristic, and render the indicator indicative of the selection of the controllable device on the display if the gaze direction of the user and/or the orientation of the augmented reality device has changed towards the target area associated with the controllable device in response to the change of the environmental characteristic. In response to the control of the controllable device, the user may look at the target area associated with the controllable device, for instance to control the controllable device because the user dislikes the initial control. The further sensor (e.g. a light sensor configured to detect a change of the light, an sound sensor configured to detect sound in the environment, a temperature sensor configured to detect a change of temperature, etc.) may detect the environmental characteristic. If there is a (temporal) correlation between the change of the environmental characteristic and the change of the gaze of the user (and/or the orientation of the augmented reality device) towards the target area associated with the controllable device, the processor 106 may provide the indicator indicative of the selection of the controllable device. Additionally, the processor 106 may be configured to refrain from rendering the indicator indicative of the selection of the controllable device on the display 122 if the gaze direction of the user (and/or the orientation of the augmented reality device) has not changed towards the target area associated with the controllable device in response to the detected change of the environmental characteristic.

The processor 106 may be further configured to determine a time period between the environmental change and the moment the gaze direction (and/or the orientation of the augmented reality device) of the user has changed towards the target area associated with the controllable device, and set the threshold duration based on the time period. The processor 106 may, for example, be configured to set the threshold duration based on the time period such that for a longer time period a longer threshold duration is set (and for a shorter time period a shorter (required) duration). Thus, if the user would quickly respond to the initial control, the required threshold duration would be shorter, which would be beneficial for the user experience because the user may for example immediately control the selected controllable device.

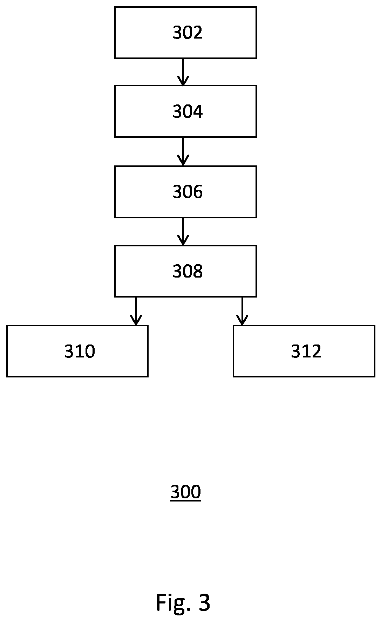

Fig. 3 shows schematically a method 300 of controlling a controllable device, comprising:
receiving 302 an input signal indicative of an environmental change in the environment,
obtaining 304, from one or more sensors, one or more sensor signals indicative of a gaze direction of a user and/or an orientation direction of the augmented reality device,
determining 306, based on one or more sensor signals, that the gaze direction of the user and/or the orientation direction of the augmented reality device has changed towards a target area within a predefined time period after the environmental change in the environment, wherein the target area is associated with the controllable device,
determining 308 a duration of the gaze of the user and/or the orientation of the augmented reality device towards the target area, and
if the duration exceeds a threshold duration, rendering 310 an indicator indicative of a selection of the controllable device on a display of an augmented reality system,
if the duration does not exceed the threshold duration, refraining 312 from rendering the indicator indicative of the selection of the controllable device on the display of the augmented reality system.

The method 300 may be executed by computer program code of a computer program product when the computer program product is run on a processing unit of a computing device, such as the processor 106 of the augmented reality system 100.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer or processing unit. In the device claim enumerating several means, several of these means may be embodied by one and the same item of hardware. The mere fact that certain measures are recited in mutually different dependent claims does not indicate that a combination of these measures cannot be used to advantage.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors or even the 'cloud'.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. An augmented reality system (100) for controlling a controllable device (130) located in an environment (150), wherein the controllable device (130) is a lighting device, the augmented reality system (100) comprising:
- an augmented reality device (120) comprising a display (122) configured to render an indicator indicative of a selection of the controllable device (130),
- an input interface (108) configured to receive an input signal indicative of an environmental change in the environment, wherein the environmental change is an illumination change in the environment,
- one or more sensors (124) configured to provide one or more sensor signals indicative of a gaze direction of a user and/or an orientation direction of the augmented reality device (120), and
- a processor (106) configured to
determine, based on one or more sensor signals from the one or more sensors (124), that the gaze direction of the user and/or the orientation direction of the augmented reality device (120) has changed towards a target area (132, 142) within a predefined time period after the environmental change in the environment, wherein the target area (132, 142) is associated with the controllable device (130),
determine a duration of the gaze of the user and/or the orientation of the augmented reality device (120) towards the target area (132, 142), and
if the duration exceeds a threshold duration, render the indicator indicative of the selection of the controllable device (130) on the display (122),
if the duration does not exceed the threshold duration, refrain from rendering the indicator indicative of the selection of the controllable device (130) on the display (122), wherein the augmented reality system (120) comprises a user interface configured to receive a user input when the indicator is rendered on the display, and wherein the processor is further configured to control the controllable device based on the user input.

2. The augmented reality system (100) of claim 1, wherein the processor is further configured to stop rendering the indicator if the user input has not been received within a predefined time period after the rendering of the indicator.

3. The augmented reality system (100) of any preceding claim, wherein the input interface is configured to receive the input signal indicative of the environmental change in the environment from the controllable device, and wherein the input signal is indicative of an initial control of the controllable device.

4. The augmented reality system (100) of any preceding claim, wherein the input interface is configured to receive the input signal indicative of the environmental change in the environment from a further sensor, the further sensor being configured to detect a change of an environmental characteristic of the environment.

5. The augmented reality system (100) of any preceding claim, wherein the processor is further configured to:
determine a time period between the environmental change and the moment the gaze direction of the user and/or the orientation direction of the augmented reality device (120) has changed towards the target area, and
set the threshold duration based on the time period.

6. The augmented reality system (100) of claim 5, wherein the processor is configured to set the threshold duration based on the time period such that for a longer time period a longer threshold duration is set.

7. The augmented reality system (100) of any preceding claim, wherein the user interface is a brain control interface configured to detect brain activity of a user and to derive a control command from the brain activity, wherein the user input is the derived control command.

8. The augmented reality system (100) of any preceding claim, wherein (i) the user interface is a voice control interface and the user input is a voice command, or (ii) the user interface is a gesture interface and the user input is a gesture command.

9. The augmented reality system (100) of any preceding claim, wherein the controllable device is located in the target area.

10. The augmented reality system (100) of any preceding claim, wherein the one or more sensors are configured to determine the gaze direction of the user and wherein the one or more sensors comprise an eye tracking sensor.

11. The augmented reality system (100) of any preceding claim, wherein the one or more sensors comprise one or more location and/or orientation sensors for detecting a location and/or an orientation of the user relative to the target area (132, 142) and/or the orientation direction of the augmented reality device (120).

12. A method (300) of controlling a controllable device (130) located in an environment, wherein the controllable device (130) is a lighting device, the method comprising:
receiving (302) an input signal indicative of an environmental change in the environment, wherein the environmental change is an illumination change in the environment,
obtaining (304), from one or more sensors, one or more sensor signals indicative of a gaze direction of a user and/or an orientation direction of the augmented reality device,
determining (306), based on one or more sensor signals, that the gaze direction of the user and/or the orientation direction of the augmented reality device has changed towards a target area within a predefined time period after the environmental change in the environment, wherein the target area is associated with the controllable device,
determining (308) a duration of the gaze of the user and/or the orientation of the augmented reality device towards the target area, and
if the duration exceeds a threshold duration, rendering (310) an indicator indicative of a selection of the controllable device on a display of an augmented reality system,
if the duration does not exceed the threshold duration, refraining (312) from rendering the indicator indicative of the selection of the controllable device on the display of the augmented reality system, wherein the method further comprises:
receiving, via a user interface, a user input when the indicator is rendered on the display, and
controlling the controllable device based on the user input.

13. A computer program product for a computing device, the computer program product comprising computer program code to perform the method (300) of claim 12 when the computer program product is run on a processing unit of the computing device.

## Patentansprüche

1. Augmented-Reality-System (100) zum Steuern einer steuerbaren Vorrichtung (130), die in einer Umgebung (150) positioniert ist, wobei die steuerbare Vorrichtung (130) eine Beleuchtungsvorrichtung ist, das Augmented-Reality-System (100) umfassend:
- eine Augmented-Reality-Vorrichtung (120), umfassend eine Anzeige (122), die konfiguriert ist, um einen Indikator wiederzugeben, der eine Auswahl der steuerbaren Vorrichtung (130) angibt,
- eine Eingabeschnittstelle (108), die konfiguriert ist, um ein Eingabesignal zu empfangen, das eine Umgebungsänderung in der Umgebung angibt, wobei die Umgebungsänderung eine Beleuchtungsänderung in der Umgebung ist,
- einen oder mehrere Sensoren (124), die konfiguriert sind, um ein oder mehrere Sensorsignale bereitzustellen, die eine Blickrichtung eines Benutzers und/oder eine Orientierungsrichtung der Augmented-Reality-Vorrichtung (120) angeben, und
- einen Prozessor (106), der konfiguriert ist zum
Bestimmen, basierend auf einem oder mehreren Sensorsignalen von dem einen oder den mehreren Sensoren (124), dass sich die Blickrichtung des Benutzers und/oder die Orientierungsrichtung der Augmented-Reality-Vorrichtung (120) innerhalb einer vordefinierten Zeitspanne nach der Umgebungsänderung in der Umgebung zu einem Zielbereich (132, 142) hin geändert hat, wobei der Zielbereich (132, 142) der steuerbaren Vorrichtung (130) zugeordnet ist,
Bestimmen einer Dauer des Blicks des Benutzers und/oder der Orientierung der Augmented-Reality-Vorrichtung (120) zu dem Zielbereich (132, 142) hin, und
falls die Dauer eine Schwellendauer überschreitet, Wiedergeben des Indikators, der die Auswahl der steuerbaren Vorrichtung (130) angibt, auf der Anzeige (122),
falls die Dauer die Schwellendauer nicht überschreitet, Unterlassen des Wiedergebens des Indikators, der die Auswahl der steuerbaren Vorrichtung (130) angibt, auf der Anzeige (122), wobei das Augmented-Reality-System (120) eine Benutzerschnittstelle umfasst, die konfiguriert ist, um eine Benutzereingabe zu empfangen, wenn der Indikator auf der Anzeige wiedergegeben wird, und wobei der Prozessor ferner konfiguriert ist, um die steuerbare Vorrichtung basierend auf der Benutzereingabe zu steuern.

2. Augmented-Reality-System (100) nach Anspruch 1, wobei der Prozessor ferner konfiguriert ist, um das Wiedergeben des Indikators zu beenden, falls die Benutzereingabe nicht innerhalb einer vordefinierten Zeitspanne nach dem Wiedergeben des Indikators empfangen wurde.

3. Augmented-Reality-System (100) nach einem der vorstehenden Ansprüche, wobei die Eingabeschnittstelle konfiguriert ist, um das Eingabesignal, das die Umgebungsveränderung in der Umgebung angibt, von der steuerbaren Vorrichtung zu empfangen, und wobei das Eingabesignal eine anfängliche Steuerung der steuerbaren Vorrichtung angibt.

4. Augmented-Reality-System (100) nach einem der vorstehenden Ansprüche, wobei die Eingabeschnittstelle konfiguriert ist, um das Eingabesignal, das die Umgebungsveränderung in der Umgebung angibt, von einem weiteren Sensor zu empfangen, wobei der weitere Sensor konfiguriert ist, um eine Änderung einer Umgebungseigenschaft der Umgebung zu erfassen.

5. Augmented-Reality-System (100) nach einem der vorstehenden Ansprüche, wobei der Prozessor ferner konfiguriert ist zum:
Bestimmen einer Zeitspanne zwischen der Umgebungsänderung und dem Moment, zu dem sich die Blickrichtung des Benutzers und/oder die Orientierungsrichtung der Augmented-Reality-Vorrichtung (120) zu dem Zielbereich hin geändert hat, und
Einstellen der Schwellendauer basierend auf der Zeitspanne.

6. Augmented-Reality-System (100) nach Anspruch 5, wobei der Prozessor konfiguriert ist, um die Schwellendauer basierend auf der Zeitspanne derart einzustellen, dass für eine längere Zeitspanne eine längere Schwellendauer eingestellt wird.

7. Augmented-Reality-System (100) nach einem der vorstehenden Ansprüche, wobei die Benutzerschnittstelle eine Gehirnsteuerungsschnittstelle ist, die konfiguriert ist, um eine Gehirnaktivität eines Benutzers zu erfassen und um einen Steuerungsbefehl aus der Gehirnaktivität abzuleiten, wobei die Benutzereingabe der abgeleitete Steuerungsbefehl ist.

8. Augmented-Reality-System (100) nach einem der vorstehenden Ansprüche, wobei (i) die Benutzerschnittstelle eine Sprachsteuerungsschnittstelle ist und die Benutzereingabe ein Sprachbefehl ist, oder (ii) die Benutzerschnittstelle eine Gestenschnittstelle ist und die Benutzereingabe ein Gestenbefehl ist.

9. Augmented-Reality-System (100) nach einem der vorstehenden Ansprüche, wobei die steuerbare Vorrichtung in dem Zielbereich positioniert ist.

10. Augmented-Reality-System (100) nach einem der vorstehenden Ansprüche, wobei der eine oder die mehreren Sensoren konfiguriert sind, um die Blickrichtung des Benutzers zu bestimmen, und wobei der eine oder die mehreren Sensoren einen Augenverfolgungssensor umfassen.

11. Augmented-Reality-System (100) nach einem der vorstehenden Ansprüche, wobei der eine oder die mehreren Sensoren einen oder mehrere Positions- und/oder Orientierungssensoren zum Erfassen einer Position und/oder einer Orientierung des Benutzers relativ zu dem Zielbereich (132, 142) und/oder der Orientierungsrichtung der Augmented-Reality-Vorrichtung (120) umfassen.

12. Verfahren (300) zum Steuern einer steuerbaren Vorrichtung (130), die in einer Umgebung positioniert ist, wobei die steuerbare Vorrichtung (130) eine Beleuchtungsvorrichtung ist, das Verfahren umfassend:
Empfangen (302) eines Eingabesignals, das eine Umgebungsänderung in der Umgebung angibt, wobei die Umgebungsänderung eine Beleuchtungsänderung in der Umgebung ist,
Erhalten (304), von einem oder mehreren Sensoren, eines oder mehrerer Sensorsignale, die eine Blickrichtung eines Benutzers und/oder eine Orientierungsrichtung der Augmented-Reality-Vorrichtung angeben,
Bestimmen (306), basierend auf einem oder mehreren Sensorsignalen, dass sich die Blickrichtung des Benutzers und/oder die Orientierungsrichtung der Augmented-Reality-Vorrichtung innerhalb einer vordefinierten Zeitspanne nach der Umgebungsänderung in der Umgebung zu einem Zielbereich hin geändert hat, wobei der Zielbereich der steuerbaren Vorrichtung zugeordnet ist,
Bestimmen (308) einer Dauer des Blicks des Benutzers und/oder der Orientierung der Augmented-Reality-Vorrichtung zu dem Zielbereich hin, und
falls die Dauer eine Schwellendauer überschreitet, Wiedergeben (310) eines Indikators, der eine Auswahl der steuerbaren Vorrichtung angibt, auf einer Anzeige eines Augmented-Reality-Systems,
falls die Dauer die Schwellendauer nicht überschreitet, Unterlassen (312) des Wiedergebens des Indikators, der die Auswahl der steuerbaren Vorrichtung angibt, auf der Anzeige des Augmented-Reality-Systems, wobei das Verfahren ferner umfasst:
Empfangen, über eine Benutzerschnittstelle, einer Benutzereingabe, wenn der Indikator auf der Anzeige dargestellt wird, und
Steuern der steuerbaren Vorrichtung basierend auf der Benutzereingabe.

13. Computerprogrammprodukt für eine Rechenvorrichtung, das Computerprogrammprodukt umfassend Computerprogrammcode, um das Verfahren (300) nach Anspruch 12 durchzuführen, wenn das Computerprogrammprodukt auf einer Verarbeitungseinheit der Rechenvorrichtung ausgeführt wird.

## Revendications

1. Système de réalité augmentée (100) permettant de commander un dispositif pouvant être commandé (130) situé dans un environnement (150), dans lequel le dispositif pouvant être commandé (130) est un dispositif d'éclairage, le système de réalité augmentée (100) comprenant :
- un dispositif de réalité augmentée (120) comprenant une unité d'affichage (122) configurée pour afficher un indicateur indiquant une sélection du dispositif pouvant être commandé (130),
- une interface d'entrée (108) configurée pour recevoir un signal d'entrée indiquant un changement environnemental dans l'environnement, dans lequel le changement environnemental est un changement d'éclairement dans l'environnement,
- un ou plusieurs capteurs (124) configurés pour fournir un ou plusieurs signaux de capteur indiquant une direction de regard d'un utilisateur et/ou une direction d'orientation du dispositif de réalité augmentée (120), et
- un processeur (106) configuré pour :
déterminer, sur la base d'un ou plusieurs signaux de capteur provenant du ou des capteurs (124), que la direction de regard de l'utilisateur et/ou la direction d'orientation du dispositif de réalité augmentée (120) a changé en direction d'une zone cible (132, 142) pendant une période prédéfinie après le changement environnemental dans l'environnement, dans lequel la zone cible (132, 142) est associé au dispositif pouvant être commandé (130),
déterminer une durée du regard de l'utilisateur et/ou l'orientation du dispositif de réalité augmenté (120) en direction de la zone cible (132, 142), et
si la durée dépasse une durée seuil, afficher l'indicateur indiquant la sélection du dispositif pouvant être commandé (130) sur l'unité d'affichage (122),
si la durée ne dépasse pas la durée seuil, s'abstenir d'afficher l'indicateur indiquant la sélection du dispositif pouvant être commandé (130) sur l'unité d'affichage (122), dans lequel le système de réalité augmentée (120) comprend une interface utilisateur configurée pour recevoir une entrée utilisateur lorsque l'indicateur est affiché sur l'unité d'affichage, et dans lequel le processeur est en outre configuré pour commander le dispositif pouvant être commandé sur la base de l'entrée utilisateur.

2. Système de réalité augmentée (100) selon la revendication 1, dans lequel le processeur est en outre configuré pour arrêter l'affichage de l'indicateur si l'entrée utilisateur n'a pas été reçue pendant une période prédéfinie après l'affichage de l'indicateur.

3. Système de réalité augmentée (100) selon l'une quelconque revendication précédente, dans lequel l'interface d'entrée est configurée pour recevoir le signal d'entrée indiquant le changement environnemental dans l'environnement en provenance du dispositif pouvant être commandé, et dans lequel le signal d'entrée indique une commande initiale du dispositif pouvant être commandé.

4. Système de réalité augmentée (100) selon l'une quelconque revendication précédente, dans lequel l'interface d'entrée est configurée pour recevoir le signal d'entrée indiquant le changement environnemental dans l'environnement en provenance d'un autre capteur, l'autre capteur étant configuré pour détecter un changement d'une caractéristique environnementale de l'environnement.

5. Système de réalité augmentée (100) selon l'une quelconque revendication précédente, dans lequel le processeur est en outre configuré pour :
déterminer une période entre le changement environnemental et le moment où la direction de regard de l'utilisateur et/ou la direction d'orientation du dispositif de réalité augmentée (120) a changé en direction de la zone cible, et
définir la durée seuil sur la base de la période.

6. Système de réalité augmentée (100) selon la revendication 5, dans lequel le processeur est configuré pour définir la durée seuil sur la base de la période de telle sorte que, pour une période plus longue, une durée seuil plus longue est définie.

7. Système de réalité augmentée (100) selon l'une quelconque revendication précédente, dans lequel l'interface utilisateur est une interface de commande cérébrale configurée pour détecter une activité cérébrale d'un utilisateur et pour dériver une instruction de commande à partir de l'activité cérébrale, dans lequel l'entrée utilisateur est l'instruction de commande dérivée.

8. Système de réalité augmentée (100) selon l'une quelconque revendication précédente, dans lequel (i) l'interface utilisateur est une interface de commande vocale et l'entrée utilisateur est une instruction vocale, ou (ii) l'interface utilisateur est une interface gestuelle et l'entrée utilisateur est une instruction gestuelle.

9. Système de réalité augmentée (100) selon l'une quelconque revendication précédente, dans lequel le dispositif pouvant être commandé est situé dans la zone cible.

10. Système de réalité augmentée (100) selon l'une quelconque revendication précédente, dans lequel le ou les capteurs sont configurés pour déterminer la direction de regard de l'utilisateur et dans lequel le ou les capteurs comprennent un capteur de suivi oculaire.

11. Système de réalité augmentée (100) selon l'une quelconque revendication précédente, dans lequel le ou les capteurs comprennent un ou plusieurs capteurs d'emplacement et/ou d'orientation permettant de détecter un emplacement et/ou une orientation de l'utilisateur par rapport à la zone cible (132, 142) et/ou la direction d'orientation du dispositif de réalité augmentée (120).

12. Procédé (300) permettant de commander un dispositif pouvant être commandé (130) situé dans un environnement, dans lequel le dispositif pouvant être commandé (130) est un dispositif d'éclairage, le procédé comprenant :
la réception (302) d'un signal d'entrée indiquant un changement environnemental dans l'environnement, dans lequel le changement environnemental est un changement d'éclairement dans l'environnement,
l'obtention (304), auprès d'un ou plusieurs capteurs, d'un ou plusieurs signaux de capteur indiquant une direction de regard d'un utilisateur et/ou une direction d'orientation du dispositif de réalité augmentée,
le fait de déterminer (306), sur la base d'un ou plusieurs signaux de capteur, que la direction de regard de l'utilisateur et/ou la direction d'orientation du dispositif de réalité augmentée a changé en direction d'une zone cible pendant une période prédéfinie après le changement environnemental dans l'environnement, dans lequel la zone cible est associée au dispositif pouvant être commandé,
la détermination (308) d'une durée du regard de l'utilisateur et/ou de l'orientation du dispositif de réalité augmentée en direction de la zone cible, et
si la durée dépasse une durée seuil, l'affichage (310) d'un indicateur indiquant une sélection du dispositif pouvant être commandé sur une unité d'affichage d'un système de réalité augmentée,
si la durée ne dépasse pas la durée seuil, le fait de s'abstenir (312) d'afficher l'indicateur indiquant la sélection du dispositif pouvant être commandé sur l'unité d'affichage du système de réalité augmentée, dans lequel le procédé comprend en outre :
la réception, par l'intermédiaire d'une interface utilisateur, d'une entrée utilisateur lorsque l'indicateur est affiché sur l'unité d'affichage, et
la commande du dispositif pouvant être commandé sur la base de l'entrée utilisateur.

13. Produit-programme d'ordinateur pour un dispositif informatique, le produit-programme d'ordinateur comprenant un code de programme informatique pour réaliser le procédé (300) selon la revendication 12 lorsque le produit-programme d'ordinateur est exécuté sur une unité de traitement du dispositif informatique.
